# EUROPEAN PATENT SPECIFICATION

(11) **EP 0 682 203 B1**
(45) Date of publication and mention of the grant of the patent: **10.03.1999**
(21) Application number: 95200810.0
(22) Date of filing: 30.03.1995
(51) Int. Cl.: F16L 27/087, F16L 37/14

(54) **Coupling device**
Kupplungsvorrichtung
Dispositif de raccordement

(30) Priority: 13.05.1994 NL 9400792
(43) Date of publication of application: 15.11.1995
(73) Proprietor: Baha Management B.V., NL-6852 HG Huissen (NL)
(72) Inventor: Scheffer, Petrus Matheus Maria, NL-6661 AR Elst (NL)
(74) Representative: Prins, Hendrik Willem

(56) References cited:
- DE-B- 2 854 456
- GB-A- 2 041 131
- US-A- 2 933 321
- US-A- 3 390 897

## Description

The invention relates to a coupling device suitable for the application in a hydraulically or pneumatically driven ground-working tool with at least one passage for a medium.

Hydraulically or pneumatically driven ground-working tools are generally driven by a stationary crane, crane lorry or other vehicle with a combustion engine. Various hydraulically or pneumatically driven ground-working tools can be attached in order to perform different operations. For the case that for instance damage to the ground-working tool occurs it is also desirable that the ground-working tool is releasably coupled so that it can be simply replaced by another tool. Existing devices have for this purpose a mechanical coupling system for the tool and separate conduit couplings for hydraulic or pneumatic conduits. The mutually separated couplings require a number of operations during coupling or uncoupling of a tool. The danger of damage is also present, e.g. by omitting to disconnect a conduit coupling.

U.S. patent US-A-2,933,321 discloses a coupling in a gun drill holder. The coupling comprises a shaft, and inner and outer sleeves, all provided with at least one channel. The channels are provided with connecting means for communication between the channels. Coupling and decoupling the gun drill houlder is labour-intensive.

The present invention has for its object to provide a coupling device with which both a mechanical coupling and at least one conduit coupling can be effected with a single coupling operation. It must herein be possible either to connect up the tool using only one operation such that it can be used immediately, or to wholly uncouple the tool.

The present invention provides for this purpose a coupling device according claim 1. Using such a coupling the channels are also mutually connected by the mechanical coupling. The locking pin prevents undesired disconnection of the coupling.

Coupling by means of a transverse hole provided in the parts to be coupled and a cooperating locking pin for insertion through the holes, apart from a mechanical coupling in combination with a conduit coupling, is e.g. known from U.S. patent US-A-3,390,897 and the U.K. patent application GB-A-2 041 131. Both these documents describe a locking pin that has to be separated from the other parts during a coupling or decoupling operation. The coupling device according the invention makes it possible by turning the coupling pin to detach the shaft and outer sleeve from, and respectively couple them to, the inner sleeve. This will be further elucidated with reference to the following figures. With this construction the outer sleeve and the shaft can remain mutually connected during uncoupling and coupling. This simplifies coupling and reduces the chance of errors.

Another preferred embodiment is characterized according claim 2. Only the insertion depth of the shaft into the outer sleeve is of importance for co-action of the opening of the channel through the outer sleeve and the peripheral groove. The coupling device therefore functions in both positions in which the locking pin can connect the outer sleeve to the shaft.

Yet another preferred embodiment is characterized in that the shaft is provided with a plurality of peripheral grooves and the outer sleeve comprises a plurality of channels which run through the outer sleeve, which channels run from the inner surface of the outer sleeve corresponding in size with the shaft, wherein the openings are arranged at different heights in the inner surface. With this construction it is possible to realize the above stated advantages in coupling devices with which at least two conduits also have to be mutually connected. This will usually be the case in practice with for instance hydraulic apparatus, that is, a feed and drain conduit.

The outer sleeve preferably comprises a coupling member connecting onto each channel and the inner sleeve preferably comprises counter coupling members co-acting with the coupling members, which coupling members and counter coupling members are preferably placed parallel to the shaft. The coupling and counter coupling members are placed in mutual connection by sliding together the inner sleeve and the outer sleeve. This does not therefore require an additional operation.

The inner sleeve is preferably connected on an end surface to a baseplate. This latter enables constructionally simple fixing of a tool to the inner sleeve.

Yet another preferred embodiment is characterized in that the connecting means for connecting a channel in the outer sleeve and a channel in the inner sleeve are formed by a dowel pin containing at least one medium feed channel and a medium-tight contact opening connectable to the dowel pin. The dowel pin is preferably provided with at least one chamfered side wall. It is possible by means of this construction to arrange a connection between both channels, wherein there is no or virtually no clearance between the connecting means. This means that a connection can be effected which is completely medium-tight. In addition, the construction simplifies mutual positioning of the inner sleeve and the outer sleeve.

The contact opening is formed in a preferred embodiment by a counter pin which is placed axially in a cylindrical opening and the outer diameter of which practically corresponds with the medium passage opening in the dowel pin. This preferred embodiment also provides advantages in realizing a medium-tight connection. It is herein also possible after frequent use, and the thereby resulting wear, to replace the counter pin with a new counter pin. In this way it is possible in comparatively very simple manner to realize the connection after prolonged use. It should also be apparent here that both the dowel pin as referred to in this preferred embodiment and the previously mentioned dowel pin can be provided with valves or other sealing means to prevent throughfeed medium escaping in the uncoupled situation.

For a simplified positioning of the outer sleeve and the inner sleeve in relation to each other it is also possible to give the outside of the inner sleeve and the inside of the outer sleeve a mutually fitting conical form, or to give the dowel pin and the contact opening a mutually fitting conical form. Due to these mutually fitting conical forms the sleeve couplings can be mutually positioned in self-aligning manner.

The present invention will be further elucidated with reference to the non-limitative embodiments shown in the following figures. Herein:
fig. 1 shows a perspective view of a coupling device according to the invention in disassembled state;
fig. 2 shows a cross section of the coupling device of fig. 1 in assembled state; and
fig. 3 shows a cross section of an alternative embodiment of the coupling device according to the invention.

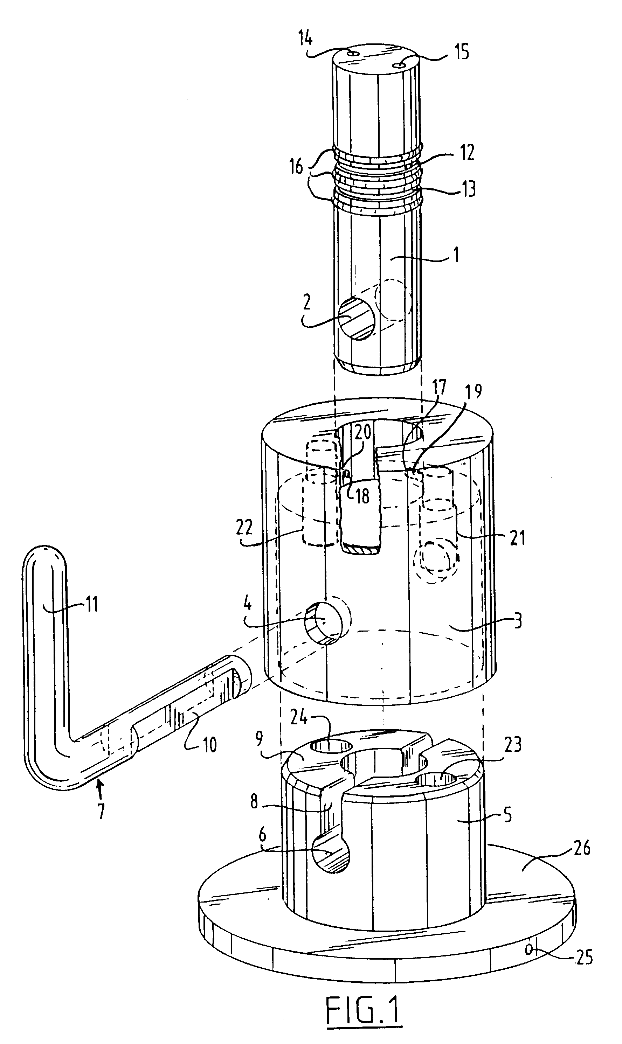

Fig. 1 shows a shaft 1 in which a transverse hole 2 is arranged, an outer sleeve 3 with a transverse hole 4 and an inner sleeve 5 with a transverse hole 6. By sliding together the shaft 1, outer sleeve 3 and inner sleeve 5 in a manner such that the holes 2, 4 and 6 lie in one line, it becomes possible to place a locking pin 7 through holes 2, 4 and 6. The hole 6 in inner sleeve 5 is open to the head end surface 9 of inner sleeve 5 by means of a slot 8. Locking pin 7 comprises a flattened portion 10 which in the position shown in this figure is vertically displaceable through slot 8. By now placing locking pin 7 through the holes 2, 4 of respectively shaft 1 and outer sleeve 3, these latter can be respectively fixedly coupled to and uncoupled from the inner sleeve 5 in simple manner by turning the locking pin 7. For simple rotation the locking pin 7 is provided with a handle 11.

The shaft 1 comprises peripheral grooves 12, 13 which are respectively connected to channels 14, 15 running through the shaft for passage of a medium. Using such a medium a tool (not shown) can be driven. Sealing rings 16 are fixed on either side of the grooves 12, 13. Openings 17, 18 of channels 19, 20 arranged in the outer sleeve 3 co-act respectively with the grooves 12, 13 when the transverse holes 2, 4 lie in one line. The channels 19, 20 are provided on their side facing toward the inner sleeve 5 with protruding conduit coupling elements 21, 22 for co-action with counter conduit couplings 23, 24 forming part of the inner sleeve 5. These conduit couplings 21, 22 and counter conduit couplings 23, 24 can be formed by existing rapid-action couplings. Also shown in the figure is an orifice 25 of a channel which runs through a baseplate 26 which is connected in turn to the inner sleeve 5, this in a manner such that channel 25 communicates with counter conduit coupling 23. As noted above, this figure relates to a non-limitative embodiment, as neither shaft 1 nor outer and inner sleeves 3, 5 necessarily have to have a round shape.

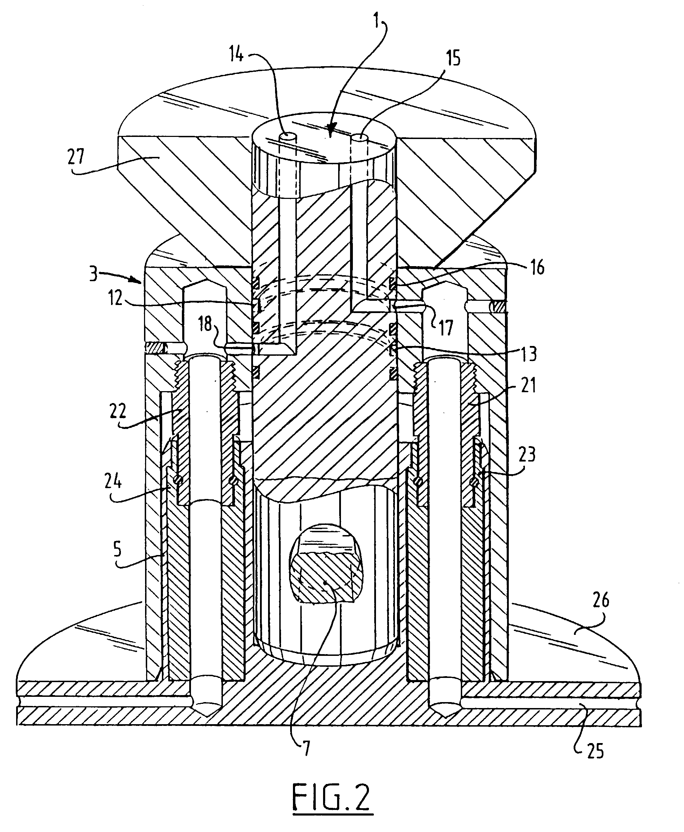

Fig. 2 shows shaft 1, outer sleeve 3 and inner sleeve 5 in a coupled state and locked by the locking pin 7. Clearly shown in this figure is the co-action of the grooves 12, 13 in shaft 1 with the apertures 17, 18 in outer sleeve 3. The co-action of conduit couplings 21, 22 with counter conduit couplings 23, 24 can also be seen clearly in the figure. Further shown round shaft 1 is a rotator part 27 not shown in fig. 1.

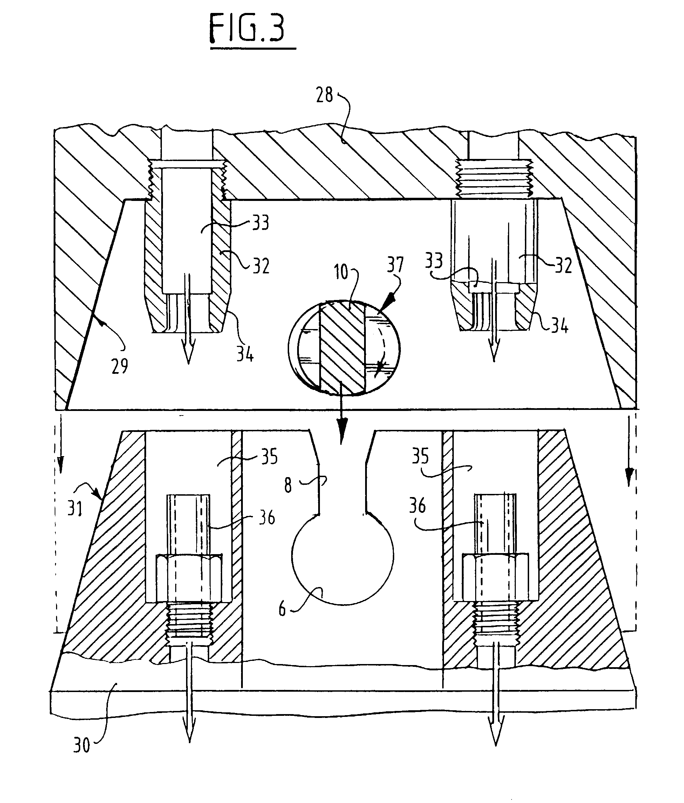

Fig. 3 shows an outer sleeve 28 with a conical inner side and an inner sleeve 30 with a conical outer side 31. These conical sides 29, 31 are formed such that they fit onto each other. The outer sleeve 28 is also provided with dowel pins 32 with a central passage opening 33 for the medium for throughfeed. The outer sides of the dowel pins 32 comprise chamfered edges 34 which provide a simply effected and clearance-free coupling. In the inner sleeve 30 are arranged cylindrical openings 35 in which counter pins 36 are arranged. These counter pins 36 have an outer diameter practically corresponding with the diameter of passage opening 33 in the dowel pin 32. A medium-tight connection will be created by placing a dowel pin 32 in contact with a counter pin 36. A locking pin 37 is embodied eccentrically in order to still realize a good coupling when there may be fouling of one or both conical side(s) 29, 31.

The steps shown in these figures relating to the conically formed outer and inner sleeve and the dowel pin/counter pin combination can also be applied independently of each other.

## Claims

1. Coupling device suitable for the application in a hydraulically or pneumatically driven ground-working tool with at least one passage for a medium, comprising:
a shaft (1), an outer sleeve (3, 28), an inner sleeve (5, 30), all provided with at least one channel (14, 15, 19, 20, 25, 33) and connecting means (12, 13, 17, 18, 21 22, 23, 24, 32, 36) for the channels (14, 15, 19, 20, 25, 33),
**characterized in that**, in the shaft (1), the outer sleeve (3, 28) and the inner sleeve (5, 30) a transverse hole (2, 4, 6) is arranged practically perpendicularly to the longitudinal direction, of which the transverse hole (6) in the inner sleeve (5, 30) is opened to the head end surface (9) by means of a slot-like opening (8), and the device further comprises a locking pin (7) for insertion through the transverse holes (2, 4, 6), which locking pin (7) is flattened.

2. Coupling device as claimed in claim 1, **characterized in that** the shaft (1) is provided with a peripheral groove (12, 13), which groove (12, 13) is connected to the channel (14, 15) in the shaft (1), the outer sleeve (3, 28) comprises an opening which over a part of the length of the outer sleeve (3, 28) is practically as large as the shaft (1) and the channel (19, 20) of the inner surface corresponding in size with the shaft (1) runs through the outer sleeve (3, 28) for co-action with the groove (12, 13) in the shaft (1).

3. Coupling device as claimed in claim 2, **characterized in that** the shaft (1) is provided with a plurality of peripheral grooves (12, 13) and the outer sleeve (3, 28) comprises a plurality of channels (19,20) which run through the outer sleeve (3, 28), which channels (19, 20) run from the inner surface of the outer sleeve (3, 28) corresponding in size with the shaft (1), wherein the openings (17, 18) are arranged at different heights in the inner surface.

4. Coupling device as claimed in any of the foregoing claims, **characterized in that** the outer sleeve (3, 28) comprises a coupling member (21, 22) connecting onto each channel (19, 20) and the inner sleeve (5, 30) comprises counter coupling member (23, 24) co-acting with the coupling member (21, 22), which coupling member (21, 22) and counter coupling member (23, 24) are placed parallel to the shaft (1).

5. Coupling device as claimed in any of the foregoing claims, **characterized in that** the inner sleeve (5, 30) is connected on an end surface to a baseplate (26).

6. Coupling device as claimed in any of the foregoing claims, **characterized in that** the connecting means (21, 22) for connecting a channel (19, 20) in the outer sleeve (3, 28) and a channel (25) in the inner sleeve (5, 30) are formed by a dowel pin (32) containing at least one medium feed channel (33) and a medium-tight contact opening (36) connectable to the dowel pin (32).

7. Coupling device as claimed in claim 6, **characterized in that** the dowel pin (32) is provided with at least one chamfered side wall (34).

8. Coupling device as claimed in claim 6 or 7, **characterized in that** the contact opening (36) is formed by a counter pin (36) which is placed axially in a cylindrical opening (35) and the outer diameter of which practically corresponds with the medium passage opening (33) in the dowel pin (32).

9. Coupling device as claimed in any of the foregoing claims, **characterized in that** the outside of the inner sleeve (5, 30) and the inside of the outer sleeve (3, 28) have a mutually fitting conical form.

10. Coupling device as claimed in any of the claims 6-8, **characterized in that** the dowel pin (32) and the contact opening (36) have a mutually fitting, at least partly conical form.

## Patentansprüche

1. Kuppelvorrichtung zur Anwendung bei Hydraulik- oder Druckluftwerkzeugen für Erdarbeiten mit mindestens einem Durchlaß für ein Medium, bestehend aus:
einer Welle (1), einer Außenmuffe (3, 28), einer Innenmuffe (5, 30), die alle mit mindestens einem Kanal (14, 15, 19, 20, 25, 33)und mit Verbindungsmitteln (12, 13, 17, 18, 21, 22, 23, 24, 32, 36) für die Kanäle (14, 15, 19, 20, 25, 33) versehen sind,
**dadurch gekennzeichnet, daß** in der Welle (1), in der Außenmuffe (3, 28) und in der Innenmuffe (5, 30) eine quer verlaufende Bohrung (2, 4, 6) praktisch im rechten Winkel zur Längsrichtung angeordnet ist, wobei die quer verlaufende Bohrung (6) in der Innenmuffe (5, 30) mittels einer schlitzartigen Öffnung (8) zur Stirnseitenfläche (9) offen ist, und daß die Vorrichtung ferner einen Verriegelungsstift (7) aufweist, der durch die quer verlaufenden Bohrungen (2, 4, 6) gesteckt wird, wobei dieser Verriegelungsstift (7) abgeflacht ist.

2. Kuppelvorrichtung nach Anspruch 1, **dadurch gekennzeichnet, daß** die Welle (1) mit einer Umfangsrille (12, 13) versehen ist, wobei diese Rille (12, 13) mit dem Kanal (14, 15) in der Welle (1) verbunden ist, daß die Außenmuffe (3, 28) eine Öffnung aufweist, die über eine Teillänge der Außenmuffe praktisch genauso groß ist wie die Welle (1), und daß der Kanal (19, 20) der Innenseite, die in der Größe der Welle (1) entspricht, durch die Außenmuffe (3, 28) hindurch verläuft, um mit der Rille (12, 13) in der Welle (1) zusammenzuwirken.

3. Kuppelvorrichtung nach Anspruch 2, **dadurch gekennzeichnet, daß** die Welle (1) mit mehreren Umfangsrillen (12, 13) versehen ist und die Außenmuffe (3, 28) mehrere Kanäle (19, 20) aufweist, die durch die Außenmuffe (3, 28) hindurch verlaufen, wobei sich diese Kanäle (19, 20) von der Innenseite der Außenmuffe (3, 28) aus erstrecken, die in der Größe der Welle (1) entspricht, wobei die Öffnungen (17, 18) in der Innenseite in verschiedenen Höhen angeordnet sind.

4. Kuppelvorrichtung nach einem der vorherigen Ansprüche, **dadurch gekennzeichnet, daß** die Außenmuffe (3, 28) ein Kuppelglied (21, 22) aufweist, das die Verbindung zu jedem Kanal (19, 20) herstellt, und die Innenmuffe (5, 30) Gegen-Kuppelglieder (23, 24) aufweist, die mit den Kuppelgliedern (21, 22) zusammenwirken, wobei diese Kuppelglieder (21, 22) und Gegen-Kuppelglieder (23, 24) parallel zu der Welle (1) angeordnet sind.

5. Kuppelvorrichtung nach einem der vorherigen Ansprüche, **dadurch gekennzeichnet, daß** die Innenmuffe (5, 30) an einer Stirnseite mit einer Basisplatte (26) verbunden ist.

6. Kuppelvorrichtung nach einem der vorherigen Ansprüche, **dadurch gekennzeichnet, daß** die Verbindungsmittel (21, 22), die einen Kanal (19, 20) in der Außenmuffe (3, 28) mit einem Kanal (25) in der Innenmuffe (5, 30) verbinden, aus einem Paßstift (32) mit mindestens einem Mediumzufuhrkanal (33) und aus einer an den Paßstift (32) anschließbaren, mediumdichten Kontaktöffnung (36) bestehen.

7. Kuppelvorrichtung nach Anspruch 6, **dadurch gekennzeichnet, daß** der Paßstift (32) mit mindestens einer abgeschrägten Seitenwand (34) versehen ist.

8. Kuppelvorrichtung nach Anspruch 6 oder 7, **dadurch gekennzeichnet, daß** die Kontaktöffnung (36) aus einem Gegenstift (36) besteht, der axial in einer zylinderförmigen Öffnung (35) angeordnet ist und dessen Außendurchmesser praktisch der Durchlaßöffnung (33) für das Medium in dem Paßstift (32) entspricht.

9. Kuppelvorrichtung nach einem der vorherigen Ansprüche, **dadurch gekennzeichnet, daß** die Außenseite der Innenmuffe (5, 30) und die Innenseite der Außenmuffe (3, 28) eine wechselseitig passende konische Form haben.

10. Kuppelvorrichtung nach einem der Ansprüche 6 bis 8, **dadurch gekennzeichnet, daß** der Paßstift (32) und die Kontaktöffnung (36) eine wechselseitig passende, zumindest teilweise konische Form haben.

## Revendications

1. Dispositif de raccordement convenant à une application à un outil destiné au travail du sol et commandé hydrauliquement ou pneumatiquement et ayant au moins un passage pour un fluide, comprenant :
un arbre (1), un manchon externe (3, 28), un manchon interne (5, 30), ayant tous au moins un canal (14, 15, 19, 20, 25, 33) et un dispositif de connexion (12, 13, 17, 18, 21, 22, 23, 24, 32, 36) des canaux (14, 15, 19, 20, 25, 33),
caractérisé en ce que, dans l'arbre (1), le manchon externe (3, 28) et le manchon interne (5, 30), un trou transversal (2, 4, 6) est placé en direction pratiquement perpendiculaire à la direction longitudinale, le trou transversal (6) du manchon interne (5, 30) débouchant vers la surface d'extrémité de tête (9) par une ouverture (8) en forme de fente, et le dispositif comporte en outre une broche de blocage (7) destinée à être introduite dans les trous transversaux (2, 4, 6), la broche de blocage (7) étant aplatie.

2. Dispositif de raccordement selon la revendication 1, caractérisé en ce que l'arbre (1) a une gorge périphérique (12, 13), cette gorge (12, 13) est connectée au canal (14, 15) de l'arbre (1), le manchon externe (3, 28) comporte une ouverture qui, sur une partie de la longueur du manchon externe (3, 28), est pratiquement aussi grande que l'arbre (1), et le canal (19, 20) de la surface interne dont la dimension correspond à l'arbre (1) passe dans le manchon externe (3, 28) pour coopérer avec la gorge (12, 13) formée dans l'arbre (1).

3. Dispositif de raccordement selon la revendication 2, caractérisé en ce que l'arbre (1) possède plusieurs gorges périphériques (12, 13) et le manchon externe (3, 28) comprend plusieurs canaux (19, 20) qui sont formés dans le manchon externe (3, 28), les canaux (19, 20) partant de la surface interne du manchon externe (3, 28) de dimension correspondant à l'arbre (1), dans laquelle les ouvertures (17, 18) sont disposées à des hauteurs différentes à la surface interne.

4. Dispositif de raccordement selon l'une quelconque des revendications précédentes, caractérisé en ce que le manchon externe (3, 28) comprend un organe de raccordement (21, 22) se raccordant à chaque canal (19, 20) et le manchon interne (5, 30) comprend un organe complémentaire de raccordement (23, 24) coopérant avec l'organe de raccordement (21, 22) , l'organe de raccordement (21, 22) et l'organe complémentaire de raccordement (23, 24) étant placés parallèlement à l'arbre (1).

5. Dispositif de raccordement selon l'une quelconque des revendications précédentes, caractérisé en ce que le manchon interne (5, 30) est raccordé par une surface interne à une plaque de base (26).

6. Dispositif de raccordement selon l'une quelconque des revendications précédentes, caractérisé en ce que le dispositif de connexion (21, 22) destiné à connecter un canal (19, 20) du manchon externe (3, 28) et un canal (25) du manchon interne (5, 30) est formé par un goujon (32) qui contient au moins un canal (33) d'alimentation en fluide et une ouverture (36) de contact étanche au fluide et qui peut être raccordé au goujon (32).

7. Dispositif de raccordement selon la revendication 6, caractérisé en ce que le goujon (32) a au moins une paroi latérale chanfreinée (34).

8. Dispositif de raccordement selon la revendication 6 ou 7, caractérisé en ce que l'ouverture de contact (36) est formée par une broche complémentaire (36) qui est placée axialement dans une ouverture cylindrique (35) et dont le diamètre externe correspond pratiquement à l'ouverture (33) de passage de fluide formée dans le goujon (32).

9. Dispositif de raccordement selon l'une quelconque des revendications précédentes, caractérisé en ce que l'extérieur du manchon interne (5, 30) et l'intérieur du manchon externe (3, 28) ont des formes coniques qui s'ajustent mutuellement.

10. Dispositif de raccordement selon l'une quelconque des revendications 6 à 8, caractérisé en ce que le goujon (32) et l'ouverture de contact (36) ont une forme au moins partiellement conique afin qu'ils s'ajustent mutuellement.
